# EUROPÄISCHE PATENTSCHRIFT

(11) **EP 1 494 920 B1**
(45) Veröffentlichungstag und Bekanntmachung des Hinweises auf die Patenterteilung: **13.09.2006**
(21) Anmeldenummer: 03725041.2
(22) Anmeldetag: 16.04.2003
(51) Int. Cl.: B65B 3/32, B67C 3/20

(54) **DOSIERVORRICHTUNG FÜR FLIESSFÄHIGE PRODUKTE**
METERING DEVICE FOR FLOWABLE PRODUCTS
DISPOSITIF DE DOSAGE DE PRODUITS COULANTS

(30) Priorität: 18.04.2002 DE 20206064 U
(43) Veröffentlichungstag der Anmeldung: 12.01.2005
(73) Patentinhaber: Finnah Engineering und Packaging GMBH, 48683 Ahaus (DE)
(72) Erfinder: LINGENHOFF, Berthold, 48683 Ahaus (DE)
(74) Vertreter: Engelmann, Kristiana
(86) Internationale Anmeldenummer: PCT/EP2003/003959
(87) Internationale Veröffentlichungsnummer: WO 2003/086864

(56) Entgegenhaltungen:
- DE-A- 2 610 396
- DE-A- 3 623 417
- DE-A- 19 918 430

## Beschreibung

Die Erfindung betrifft eine Dosiervorrichtung für fließfähige Produkte, insbesondere Molkereiprodukte, gemäß dem Oberbegriff des Anspruchs 1.

Bei bekannten Dosiervorrichtungen für Flüssigprodukte (EP 0 286 785 A2) läuft das Produkt durch den zentralen Ventilzylinder in den Dosierraum zu und wird danach mittels des Dosierkolbens über einen zugleich die Zulauföffnung bildenden Spaltbereich ausgefördert. Diese Zulauföffnung ist in ihrer Abmessung konstant, so daß nur Produkte mit entsprechender Konsistenz zum Einsatz kommen können. DE 199 18 430 A1 offenbart eine Dosiervorrichtung gemäß dem Oberbegriff des anspruchs 1, mit einer Dosierhülse, die eine konstante Zulauföffnung bewirkt.

Die Erfindung befaßt sich mit dem Problem, eine Dosiervorrichtung für fließfähige Produkte zu schaffen, die mit geringem technischem Aufwand die Verarbeitung von Produkten aller üblichen Arten, insbesondere auch von Produkten mit großen stückigen Bestandteilen ermöglicht.

Die Erfindung löst dieses Problem mit einer Dosiervorrichtung mit den Merkmalen des Anspruchs 1. Hinsichtlich wesentlicher weiterer Ausgestaltungen wird auf die Ansprüche 2 bis 6 verwiesen.

Die erfindungsgemäße Dosiervorrichtung ermöglicht einen Produktzulauf von außen in den Dosierraum. Der Dosierzylinder ist dabei axial verschieblich in dem äußeren Zulaufzylinder geführt, so daß für die Ansaugung des Produktes in den inneren Dosierraum eine variable Größe des die Zulauföffnung bildenden Spaltbereiches möglich ist und damit Produkte unterschiedlicher Konsistenz und mit groben Bestandteilen, beispielsweise Früchten, ohne nachteilige Beeinflussung zur Dosierung angesaugt werden können.

Hinsichtlich weiterer Einzelheiten und Vorteile der Erfindung wird auf die nachfolgende Beschreibung und die Zeichnung verwiesen, in der die erfindungsgemäße Dosiervorrichtung an Hand eines Ausführungsbeispiels erläutert ist. In der Zeichnungen zeigen:
- Fig. 1: eine Prinzipdarstellung einer Abfülleinheit in Seitenansicht, die mehrere in einer Reihe angeordnete Dosiervorrichtungen mit jeweiligen Aufnahmebechern aufweist,
- Fig. 2: eine vergrößerte Ausschnittsdarstellung zweier Dosiervorrichtungen in jeweiligen Bewegungsphasen beim Füllen des Aufnahmebechers,
- Fig. 3: eine vergrößerte Ausschnittsdarstellung zweier Dosiervorrichtungen in unterschiedlichen Phasen beim Füllen ihres Dosierraumes,
- Fig. 4: eine vergrößerte Einzeldarstellung der Dosiervorrichtung bei deren Säuberung,
- Fig. 5 u. Fig. 6: jeweiliger Ausschnittdarstellungen der mit einem beweglichen Mundstück versehenen Dosiervorrichtung in einer zweiten Ausführung.

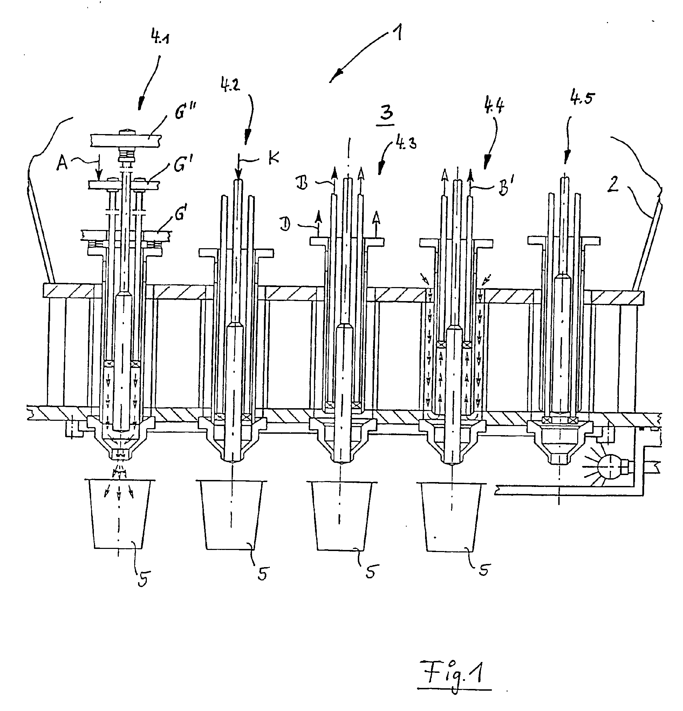

In Fig. 1 ist eine insgesamt mit 1 bezeichnete Abfüllvorrichtung für Molkereiprodukte dargestellt, die einen durch eine Wandung 2 verschlossenen Produktvorratsbehälter 3 aufweist. In diesem Behälter 3 ist eine Reihenanordnung von Dosiervorrichtungen 4 vorgesehen, die nachfolgend entsprechend ihrer unterschiedlichen Bedienstellungen nur durch die Bezeichnungen 4.1, 4.2, 4.3, 4.4 und 4.5 unterschieden sind und dabei den gleichen Aufbau aufweisen. Diese nach dem Prinzip eines Kolbendosierers wirksamen Dosiervorrichtungen 4 sind zur Befüllung von jeweiligen Bechern 5 vorgesehen, wobei diese und die Teile der Abfüllvorrichtung 1 auch als Bestandteil einer Form-, Füll- und Verschließmaschine (nicht näher dargestellt) vorgesehen sein können.

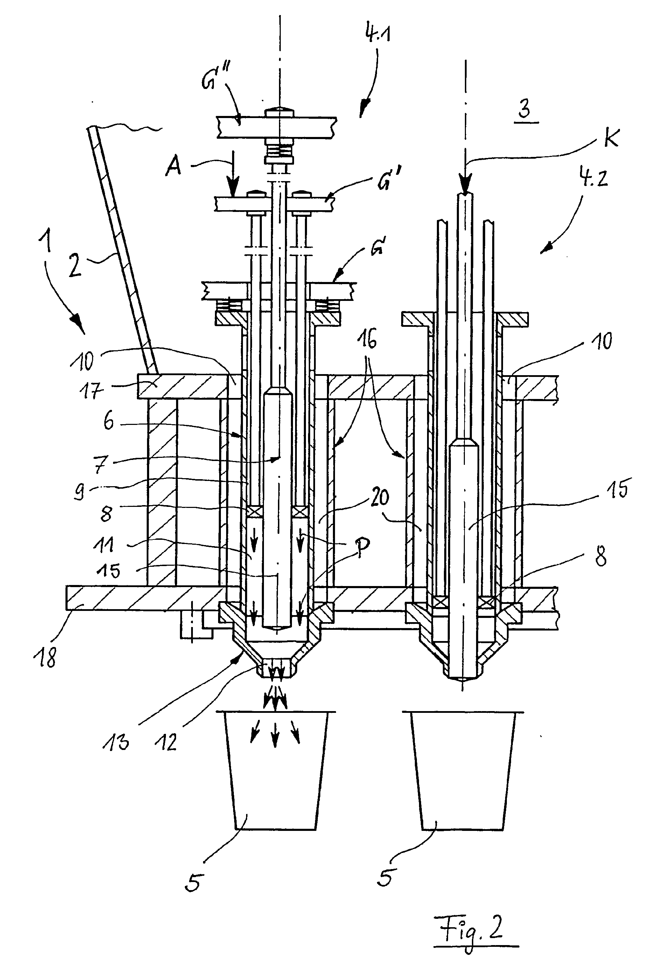

Die in Fig. 2 bis 4 näher dargestellte Dosiervorrichtung 4 ist mit einem Dosierzylinder 6, einem koaxial in diesem angeordneten Ventilzylinder 7 und einem ringförmigen Dosierkolben 8 versehen, der innerhalb eines zwischen dem Dosierzylinder 6 und dem Ventilzylinder 7 verlaufenden Ringraumes 9 so verschieblich ist, daß der Dosierkolben 8 entsprechend der Taktsteuerung der Abfüllvorrichtung 1 eine obere Ansaugstellung bzw. eine untere Austragstellung einnimmt und dabei eine jeweilige Produktmenge aus dem Produktvorratsbehälter 3 ausfördert.

Der Dosierkolben 8 teilt dabei den Ringraum 9 in einen oberen, in einem Durchlaßbereich 10 an den Produktvorratsbehälter 3 angeschlossenen Teil und in einen unteren, den Dosierraum 11 für das Produkt bildenden Teil. Der Dosierraum 11 in dem Dosierzylinder 6 ist unterseitig bis auf eine koaxiale, zylindrische Austragsöffnung 12 durch ein Mundstück 13 verschlossen. Außerdem ist ein zentraler Ventilkolben 15 vorgesehen, der zwischen einer in der Austragöffnung 12 des Mundstückes 13 eingreifenden unteren Schließstellung (Dosiervorrichtung 4.2) in eine obere Freigabestellung axial verschieblich ist (Dosiervorrichtung 4.3). Dieser Aufbau der als Kolbendosierer bezeichneten Dosiervorrichtung 4 ist prinzipiell aus der EP 0 286 785 A2 bekannt.

Bei der erfindungsgemäßen Dosiervorrichtung 4 ist der Ventilzylinder 7 mit dem Ventilkolben 15 zu einer zentralen Baueinheit zusammengefaßt, so daß der kontruktive Aufwand bei der Herstellung der jeweiligen Baugruppen durch einfachere Einzelteile, insbesondere Drehteile, wesentlich reduziert werden kann.

Die aus dem Dosierzylinder 6, dem Dosierkolben 8 und der insbesondere einteiligen Zylinder-Kolben-Einheit 7, 15 bestehende Baugruppe ist dabei koaxial in einem äußeren, oberseitig an den Produktvorratsbehälter 3 angeschlossenen Zulaufzylinder 16 angeordnet, der sich zwischen einer Bodenplatte 17 des Produktvorratsbehälters 3 und einer mit dem Mundstück 13 versehenen Halteplatte 18 der Abfüllvorrichtung 1 erstreckt.

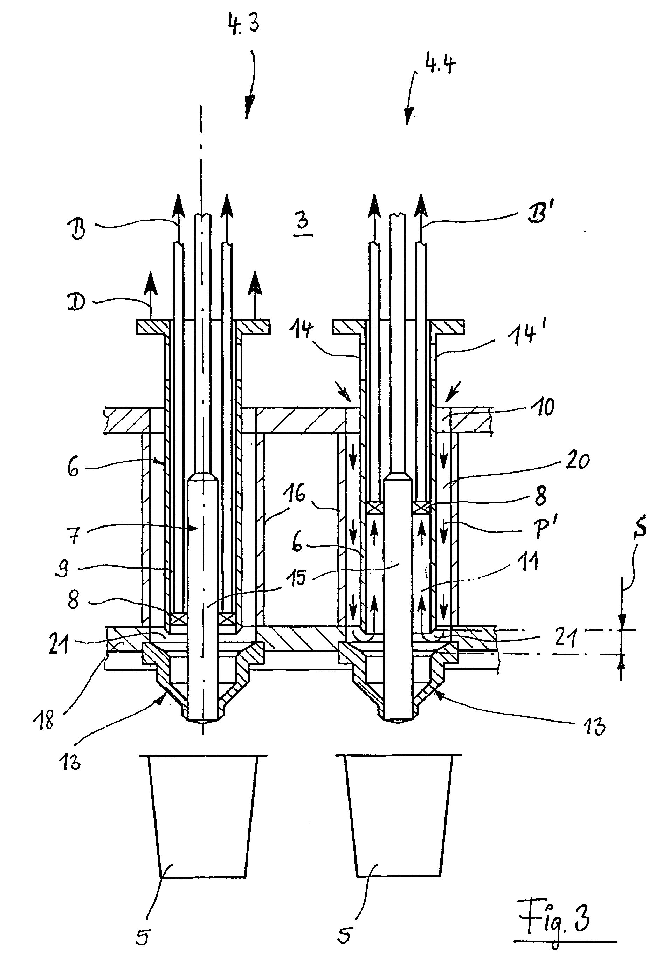

Mit dem oberseitig nahe dem Durchlaßbereich 10 mit der Bodenplatte 17 verbundenen Zulaufzylinder 16 ist ein als Ringraum um den Dosierzylinder 6 verlaufender Zulaufraum 20 geschaffen. Im Bereich dieses Zulaufraumes 20 ist der Dosierzylinder 6 gemäß einer Pfeilrichtung D aus einer unteren Schließstellung (gemäß Dosiervorrichtung 4.1, Fig. 2) in eine obere Öffnungsstellung (Dosiervorrichtung 4.3, Fig. 3) verschieblich. In der unteren Schließstellung der Dosiervorrichtung 4.1 gelangt der Dosierzylinder 6 in stirnseitigen Eingriff mit dem Mundstück 13, so daß der innere Dosierraum 11 zu dem umgebenden ringförmigen Zulaufraum 20 hin abgeschlossen ist. In der oberen Öffnungsstellung der Dosiervorrichtung 4.3 (Fig. 3) steht der Dosierraum 11 mit dem umgebenden ringförmigen Zulaufraum 20 innerhalb des Zulaufzylinders 16 über eine Zulauföffnung 21 in Verbindung, wobei sich diese Zulauföffnung 21 zwischen dem Stirnende des Dosierzylinders 6 und dem Mundstück 13 erstreckt.

Ausgehend von der in einer Abfüllphase dargestellten Dosiervorrichtung 4.1 soll die Funktionsweise der in der Reihenanordnung insbesondere synchron getakteten Dosiervorrichtungen nachfolgend näher erläutert werden. Die Dosiervorrichtung 4.1 zeigt den Ventilkolben 15 in seiner oberen Öffnungsstellung, in der die Austragöffnung 12 des Mundstückes 13 zum Dosierraum 11 hin freigegeben ist. Gleichzeitig befindet sich der Dosierzylinder 6 in seiner unteren Anlagestellung am Mundstück 13, so daß die Verbindung zwischen dem Zulaufraum 20 und dem Dosierraum 11 unterbrochen ist. In dieser Phase des Füllvorganges wird der Dosierkolben 8 mittels einer durch einen Pfeil A veranschaulichten Vorschubbewegung so verlagert, daß das im Dosierraum 11 befindliche Produkt in einer durch mehrere Pfeile P dargestellten Austragrichtung verlagert und durch die Austragöffnung 12 über das Mundstück 13 in den Becher 5 ausgefördert wird. Dabei erreicht der Dosierkolben 8 die gemäß Dosiervorrichtung 4.2 dargestellte untere Ausschubstellung, in der eine entsprechend dem Dosierraum 11 und dem Hubweg des Dosierkolbens 8 vorberechnete Produktmenge in den Becher 5 ausgefördert ist. In dieser mit dem Füllvorgang abgeschlossenen Funktionsphase der Dosiervorrichtung 4.2 kann der Ventilkolben 15 wirksam werden, wobei dieser in einer Pfeilrichtung K verlagert und die Austragöffnung 12 im Bereich des Mundstückes 13 vorschlossen wird.

Die daran anschließende Bewegungsphase ist in Fig. 3 dargestellt, wobei der nunmehr in seiner Schließstellung im Mundstück 13 verbleibende Ventilkolben 15 deutlich wird. In der nächsten Taktphase werden durch Einleitung einer Bewegung gemäß Pfeilrichtung D der Dosierzylinder 6 sowie durch Einleitung einer Bewegung gemäß Pfeil B der Dosierkolben 8 gleichzeitig oder nacheinander nach oben verlagert. Damit wird mit der Bewegung gemäß Pfeil D zuerst der spaltförmige Bereich der Zulauföffnung 21 freigegeben, um einen wiederholten Produktzulauf zu erreichen.

Dieser erneute Produktzulauf in den Dosierraum 11 ist an Hand der Dosiervorrichtung 4.4 in Fig. 3 näher dargestellt, wobei zur Ansaugung des Produktes eine weitere Verlagerung des Dosierkolbens 8 in einer Pfeilrichtung B' vorgesehen ist und dabei das aus dem Produktvorratbehälter 3 angesaugte Produkt den ringförmigen Durchlaßbereich 10 passiert, in den Zulaufraum 20 gelangt und durch diesen hindurch über die Zulauföffnung 21 den Dosierraum 11 ausfüllt. Das auch rückseitig den Dosierkolben 8 umgebende Produkt im oberen Teil des Ringraumes 9 wird dabei über jeweilige Öffnungen 14, 14' aus dem Ringraum 9 zurückgedrückt in den Behälter 3.

Für den Ansaugvorgang gemäß der Dosiervorrichtung 4.4 ist die erfindungsgemäß vorgesehene Verlagerung des Dosierzylinders 6 (Pfeil D) vorteilhaft, da dessen Abstand S im Bereich der ringförmigen Zulauföffnung 21 mit geringem Aufwand an die Konsistenz des jeweiligen Produktes angepaßt werden kann. Durch eine Variation der Hubhöhe gemäß der Bewegungsrichtung D kann das Spaltmaß S beispielsweise für flüssige Produkte gering gehalten und für pastöse Produkte entsprechend vergrößert werden. Vorteilhaft ist diese Verstellmöglichkeit insbesondere dann anwendbar, wenn Produkte mit festen Bestandteilen, beispielsweise Joghurt mit Früchten, abzufüllen sind. In diesem Anwendungsfall kann das Spaltmaß S an die Größe der Früchte angepaßt werden, so daß unbeabsichtigte Quetschungen der Früchte oder deren Verklemmung im Spaltbereich sicher vermieden sind.

Nachdem der Dosierkolben 8 seine entsprechend dem Dosiervolumen des Dosierraumes 11 bemessene obere Endstellung bei der Verlagerung gemäß Pfeilrichtung B' erreicht hat, wird in weitgehend umgekehrter Reihenfolge zu den vorbeschriebenen Bewegungsabläufen zunächst der Dosierzylinder 6 entgegen seiner Hubbewegung D abgesenkt und damit die Verbindung zwischen Zulaufraum 20 und Dosierraum 11 unterbrochen, wobei die Stirnkante des Dosierzylinders 6 eine als Schneidkante mit dem Mundstück 13 zusammenwirkende Profilierung aufweisen kann. In Anlagestellung des Dosierzylinders 6 kann der Ventilkolben 15 entgegen seiner Absenkbewegung K angehoben werden, so daß die Austragöffnung 12 im Bereich des Mundstückes 13 für die an Hand der Dosiervorrichtung 4.1 (Fig. 2) dargestellte Abfüllphase freigegeben wird und der vorgesehene Füllvorgang durch Absenken des Dosierkolbens 8 erfolgt.

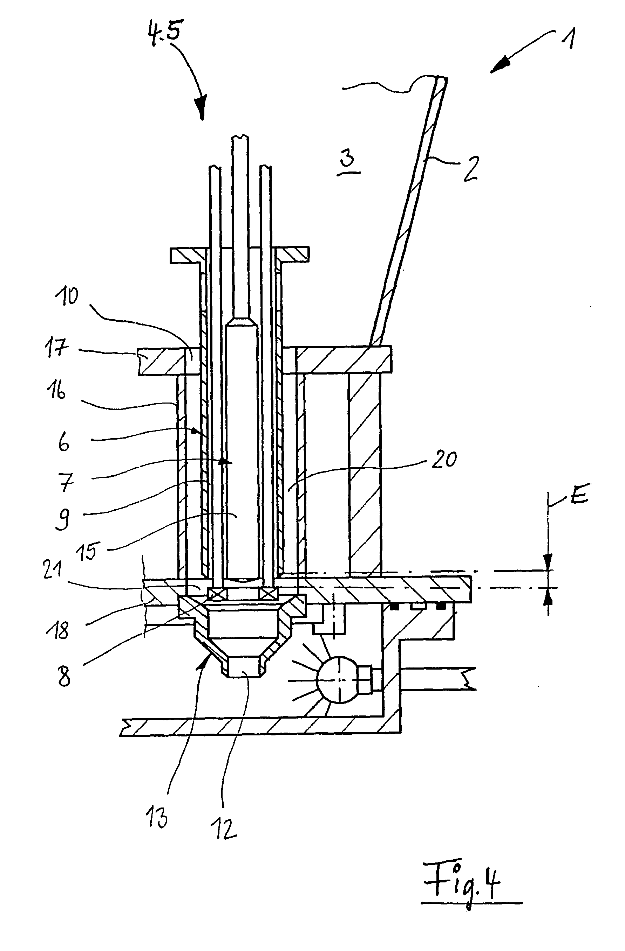

In Fig. 4 ist mit der Dosiervorrichtung 4.5 eine nach längerer Benutzung der Abfüllvorrichtung 1 zu deren Säuberung erforderliche Bewegungsphase der Baugruppen prinzipiell veranschaulicht. Für diesen Fall der Reinigung ist vorgesehen, daß der Ventilkolben 15 und der Dosierzylinder 6 in eine obere Service-stellung axial verschiebbar sind, wobei gleichzeitig der Dosierkolben 8 in eine untere Servicestellung verlagert ist. Für eine freie Zugänglichkeit des Dosierraumes 11 in dieser Servicestellung ist der Ventilkolben 15 vollständig in den Dosierzylinder 6 eingezogen, so daß diese beiden Teile im Abstand oberhalb des Dosierkolbens 8 gelegen sind und damit auch in einem Spalt E ein nicht näher dargestelltes Spülmittel, beispielsweise bei einer Dampfspülung, die Bauteile vollständig säubern kann.

Für die Verlagerung der Teile in die dargestellte Servicestellung sind die jeweiligen nicht näher dargestellten Antriebsorgane G, G', G" (Fig. 2) so ausgebildet, daß insbesondere der Dosierzylinder 6 in eine Lage oberhalb seiner Öffnungsstellung (Fig. 3, Dosiervorrichtung 4.4) in der beim Füllvorgang vorgesehenen Zulaufphase verlagerbar ist. Gleichzeitig ist in der in Fig. 4 dargestellten Servicestellung der Dosierkolben 8 so einstellbar, daß sich dieser frei oberhalb des Mundstückes 13 befindet.

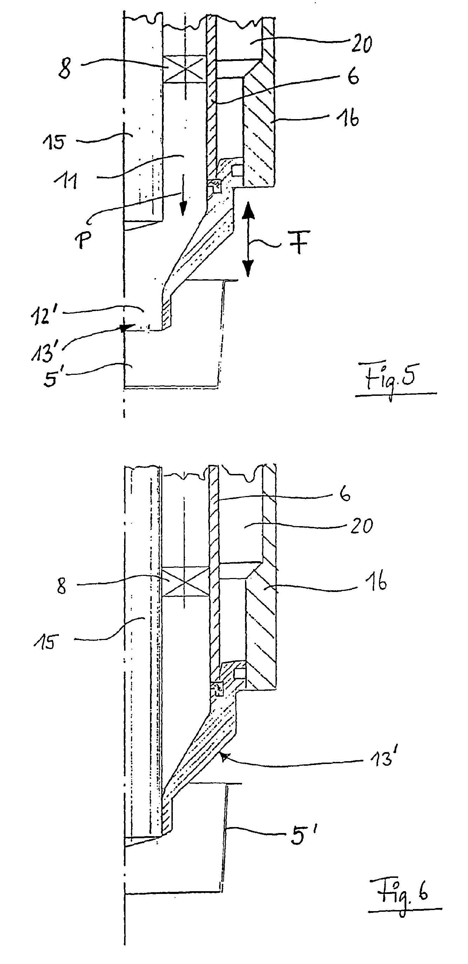

In Fig. 5 und 6 ist die Dosiervorrichtung 4 in einer veränderten Ausführung dargestellt, wobei diese mit einem Mundstück 13' versehen ist, das im unteren Endbereich des Zulaufzylinders 16 unter Abdichtung axial verschieblich abgestützt ist. Damit kann das Mundstück 13' mitsamt der vom Dosierkolben 8, dem Dosierzylinder 6 und dem Ventilkolben 15 gebildeten Dosiereinheit aus einer oberen Ausgangsstellung in die dargestellte abgesenkte Abgabestellung axial verschoben werden (Bewegungspfeil F). In Fig. 5 ist analog der Darstellung gemäß Fig. 2 (Dosiervorrichtung 4.1) die Abfüllphase für das Produkt P dargestellt, wobei das Mundstück 13' entsprechend tief in einen Becher 5' eingetaucht ist. Damit ist das Mundstück 13' nach Art einer beweglichen Düse insbesondere dann zweckmäßig, wenn das Produkt P durch eine sogenannte Bodenfüllung in den Becher 5' einzubringen ist. Für diesen Anwendungsfall ist für das Mundstück 13' ein gesonderter Antrieb (nicht dargestellt) vorzusehen, um das Mundstück 13' in die nicht dargestellte obere Ausgangsstellung zurückzubewegen.

In Fig. 6 ist der Ventilkolben 15 zum Verschließen des Mundstückes 13' in die Austragöffnung 12' abgesenkt und danach kann analog der für die Dosiervorrichtung 4.4 in Fig. 3 dargestellten Funktionsphase ein Ansaugzyklus eingeleitet werden.

## Patentansprüche

1. Dosiervorrichtung für fließfähige Produkte, insbesondere Molkereiprodukte, mit einem Dosierzylinder (6), einem koaxial in diesem angeordneten Ventilzylinder (7), einem ringförmigen, in dem Ringraum (9) zwischen Dosierzylinder (6) und Ventilzylinder (7) zwischen einer oberen Ansaugendstellung und einer unteren Austragendstellung verschieblichen Dosierkolben (8), der den Ringraum (9) in einen oberen, an einen Produktvorratsbehälter (3) angeschlossenen Teil und einen unteren, den Dosierraum (11) bildenden Teil unterteilt, mit einem den Dosierzylinder (6) unterseitig bis auf eine koaxiale, zylindrische Austragöffnung (12) verschließenden Mundstück (13), und mit einem zentralen Ventilkolben (15), der zwischen einer unteren Schließstellung in der Austragöffnung (12) des Mundstücks (13) und einer oberen Freigabestellung axial verschieblich ist, wobei der Ventilzylinder (7) zugleich den zentralen Ventilkolben (15) bildet, der Dosierzylinder (6) koaxial in einem äußeren, oberseitig an den Produktvorratsbehälter (3) angeschlossenen Zulaufzylinder (16) angeordnet ist und der Dosierzylinder (6) aus einer unteren Schließstellung, in der er in stirnseitigem Eingriff mit dem Mundstück (13) den Dosierraum (11) außenseitig abschließt, in eine obere Öffnungsstellung axial verschieblich ist, wobei der Dosierraum (11) mit dem umgebenden ringförmigen Zulaufraum (20) im Zulaufzylinder (16) über eine Zulauföffnung (21) zwischen dem Stimende des Dosierzylinders (6) und dem Mundstück (13) in Verbindung steht, **dadurch gekennzeichnet, daß** der Dosierzylinder (6) ein dessen Öffnungsstellung beim Füllvorgang mit variierbarer Hubhöhe (Pfeil D) vorgebendes Antriebsorgan (G) aufweist, derart, daß eine zwischen dem Stimende des Dosierzylinders (6) und dem Mundstück (13) gebildete Durchlaßöffnung (21) mit variablem Spaltmaß (S) an die Konsistenz des jeweiligen Produktes anpaßbar ist.

2. Dosiervorrichtung nach Anspruch 1, **dadurch gekennzeichnet, daß** der Ventilkolben (15) und der Dosierzylinder (6) in eine obere und der Dosierkolben (8) in eine untere Service-Stellung axial verschiebbar sind, wobei der Ventilkolben (15) vollständig in den Dosierzylinder (6) eingezogen ist und beide im Abstand oberhalb des Dosierkolbens (8) gelegen sind.

3. Dosiervorrichtung nach Anspruch 1 oder 2, **dadurch gekennzeichnet, daß** in der Service-Stellung der Dosierzylinder (6) sich in einer Lage oberhalb seiner Öffnungsstellung in der Zulaufphase befindet.

4. Dosiervorrichtung nach einem der Ansprüche 1 bis 3, **dadurch gekennzeichnet, daß** bei in Service-Stellung befindlichem Dosierkolben (8) dieser sich frei oberhalb des Mundstücks (13) befindet.

5. Dosiervorrichtung nach einem der Ansprüche 1 bis 4, **dadurch gekennzeichnet, daß** das Mundstück (13') im unteren Endbereich des Zulaufzylinders (16) unter Abdichtung axial verschieblich abgestützt und mitsamt der vom Dosierkolben (8), Dosierzylinder (6) und Ventilkolben (15) gebildeten Dosiereinheit aus einer oberen Ausgangsstellung in eine abgesenkte Abgabestellung axial verschieblich ist.

6. Dosiervorrichtung nach Anspruch 5, **dadurch gekennzeichnet, daß** der Ventilkolben (15) bei in Abgabestellung fixierter Dosiereinheit aufwärts in seine Freigabestellung verschieblich ist.

## Claims

1. Metering device for flowable products, particularly dairy products, having a metering cylinder (6), having a valve cylinder (7) arranged co-axially therein, having an annular metering piston (8) which is displaceable between an upper suction end-position and a lower discharge end-position in the annular space (9) between the metering cylinder (6) and the valve cylinder (7) and which divides the annular space (9) into an upper part which is connected to a product supply container (3) and a lower part which forms the metering chamber (11), having a mouth-piece (13) which, except for a co-axial cylindrical discharge opening (12), closes off the metering cylinder (6) at the bottom end, and having a central valve piston (15) which is axially displaceable between a lower closing position in the discharge opening (12) of the mouth-piece (13) and an upper opening position, the valve cylinder (7) at the same time forming the central valve piston (15), the metering cylinder (6) being arranged co-axially in an outer inlet cylinder (16) which is connected at the top end to the product supply container (3), and the metering cylinder (6) being axially displaceable from a lower closing position in which, being in engagement at its end face with the mouth-piece (13), it closes off the metering chamber (11) from the exterior, to an upper opening position, the metering chamber (11) communicating with the surrounding annular inlet chamber (20) in the inlet cylinder (16) via an inlet opening (21) between the front end of the metering cylinder (6) and the mouth-piece (13), **characterised in that** the metering cylinder (6) has a drive member (G) which, by a variable height of travel (arrow D), presets the opening position of the metering cylinder (6) in the filling process, in such a way that an opening for passage (21), whose gap is of a variable size (S) and which is formed between the front end of the metering cylinder (6) and the mouth-piece (13), can be matched to the consistency of the product involved at the time.

2. Metering device according to claim 1, **characterised in that** the valve piston (15) and the metering cylinder (6) are axially displaceable to an upper servicing position and the metering piston (8) to a lower servicing position, in which case the valve piston (15) is drawn fully into the metering cylinder (6) and the two are both situated at a distance above the metering piston (8).

3. Metering device according to claim 1 or 2, **characterised in that**, in the servicing position, the metering cylinder (6) is situated in a position above its opening position in the inlet phase.

4. Metering device according to one of claims 1 to 3, **characterised in that**, when the metering piston (8) is in the servicing position, it is situated in a free position above the mouth-piece (13).

5. Metering device according to one of claims 1 to 4, **characterised in that**, in the bottom end region of the inlet cylinder (16), the mouth-piece (13') is supported to be axially displaceable while being sealed and is axially displaceable, together with the metering unit formed by the metering piston (8), the metering cylinder (6) and the valve piston (15), from an upper starting position to a lowered dispensing position.

6. Metering device according to claim 5, **characterised in that**, when the metering unit is located in the dispensing position, the valve piston (15) is displaceable upwards to its opening position.

## Revendications

1. Dispositif de dosage pour produits aptes à l'écoulement, en particulier des produits laitiers, comprenant un cylindre de dosage (6), un cylindre à soupape (7) disposé coaxialement à l'intérieur de celui-ci, un piston de dosage annulaire (8) mobile dans l'espace annulaire (9) entre le cylindre de dosage (6) et le cylindre à soupape (7) entre une position finale d'aspiration supérieure et une position finale de distribution inférieure, le piston divisant l'espace annulaire (9) en une partie supérieure, raccordée à un réservoir de produit (3), et une partie inférieure formant l'espace de dosage (11), comprenant un bec (13) fermant le cylindre de dosage (6) du côté inférieur jusqu'à une ouverture de distribution cylindrique coaxiale (12), et comprenant un piston central à soupape (15) qui peut être déplacé axialement entre une position de fermeture inférieure dans l'ouverture de distribution (12) du bec (13) et une position de libération supérieure, dans lequel le cylindre à soupape (7) forme en même temps le piston central à soupape (15), le cylindre de dosage (6) est disposé de façon coaxiale dans un cylindre d'amenée extérieur (16) raccordé du côté supérieur au réservoir de produit (3), et le cylindre de dosage (6) peut être déplacé axialement d'une position de fermeture inférieure, dans laquelle il termine l'espace de dosage (11) du côté extérieur, en prise frontale avec le bec (13), vers une position d'ouverture supérieure, dans lequel l'espace de dosage (11) communique avec l'espace d'amenée annulaire environnant (20) dans le cylindre d'amenée (16) par l'intermédiaire d'une ouverture d'amenée (21) entre l'extrémité frontale du cylindre de dosage (6) et le bec (13), **caractérisé en ce que** le cylindre de dosage (6) présente un organe d'entraînement (G) prédéfinissant sa position d'ouverture pendant l'opération de remplissage avec une hauteur d'aspiration variable (flèche D), de telle sorte qu'une ouverture de passage (21) formée entre l'extrémité frontale du cylindre de dosage (6) et le bec (13) avec une dimension de fente (S) variable peut être adaptée à la consistance du produit respectif.

2. Dispositif de dosage selon la revendication 1, **caractérisé en ce que** le piston à soupape (15) et le cylindre de dosage (6) peuvent être déplacés axialement dans une position opérationnelle supérieure et le piston de dosage (8) peut être déplacé axialement dans une position opérationnelle inférieure, le piston à soupape (15) étant complètement rentré dans le cylindre de dosage (6), et les deux étant situés à une certaine distance au-dessus du piston de dosage (8).

3. Dispositif de dosage selon la revendication 1 ou 2, **caractérisé en ce que** dans la position opérationnelle, le cylindre de dosage (6) se trouve dans une position au-dessus de sa position d'ouverture dans la phase d'amenée.

4. Dispositif de dosage selon l'une quelconque des revendications 1 à 3, **caractérisé en ce que** lorsque le piston de dosage (8) se trouve dans une position opérationnelle, il est libre au-dessus du bec (13).

5. Dispositif de dosage selon l'une quelconque des revendications 1 à 4, **caractérisé en ce que** le bec (13') s'appuie de façon axialement mobile dans la zone d'extrémité inférieure du cylindre d'amenée (16), de façon étanche, et peut être déplacé axialement en conjonction avec l'unité de dosage formée par le piston de dosage (8), le cylindre de dosage (6) et le piston à soupape (15) d'une position de départ supérieure à une position de distribution abaissée.

6. Dispositif de dosage selon la revendication 5, **caractérisé en ce que** le piston à soupape (15), lorsque l'unité de dosage est fixée dans une position de distribution, peut être déplacé vers le haut dans sa position de libération.
